# EUROPEAN PATENT APPLICATION

(11) **EP 4 796 431 A1**
(43) Date of publication of application: **26.08.2026**
(21) Application number: 25159156.6
(22) Date of filing: 20.02.2025
(51) Int. Cl.: B64C 1/14

(54) **AN ACTUATABLE DOOR AND AN AIRCRAFT HAVING SUCH AN ACTUATABLE DOOR**

(71) Applicant: AIRBUS HELICOPTERS DEUTSCHLAND GmbH, 86609 Donauwörth (DE)
(72) Inventor: SCHWAB, Matthias, 86609 GENDERKINGEN (DE)
(74) Representative: GPI Brevets

(57) **Abstract**

The invention is related to an actuatable door (2) for an aircraft that is pivotally mounted to a support structure, comprising an actuating system (1) with a latching device (3) that comprises a latching bracket (3a) for blocking the actuatable door in a closed position, the latching bracket being pivotally mounted to a pivot bearing (3b) and connected to a pivotable mechanical transmission element (1a) via a coupling link (1b), the coupling link being pivotally mounted to the latching bracket and to the pivotable mechanical transmission element, the pivotable mechanical transmission element being coupled to a rotatable latching shaft (1c), wherein rotation of the rotatable latching shaft in an unlatching rotation direction (1g) results in pivoting of the pivotable mechanical transmission element in the unlatching rotation direction and pivoting of the latching bracket in a bracket unlatching swivel direction (3i) that is identical to a door opening swivel direction.

## Description

The invention is related to an actuatable door for an aircraft that is pivotally mounted to a support structure and pivotable in a door opening swivel direction from a closed position in the support structure toward an open position. The invention is further related to an aircraft having such an actuatable door.

Actuatable doors and, in particular, actuatable cargo doors in aircrafts usually fulfill the following major functions: They close the aircrafts in operation for maintaining a required inner pressure therein, they contribute to carrying flight loads and they allow external access to corresponding cargo compartments. Therefore, robust and safe actuating systems are required for reliably and safely closing the actuatable doors in operation, but also for fulfilling all relevant requirements defined by the competent authorities, such as e. g. in EASA CS 25.783 related to fuselage doors in general.

More specifically, according to EASA CS 25.783d (2) such actuating systems require latching systems that must be designed so that, under all aircraft flight and ground loading conditions, there is no force or torque tending to unlatch respective latches in closed state of the actuatable door. In addition, the actuating systems for the latching systems must include means for securing the latching systems in an associated latched state. These means must be independent from associated locking systems if the latching systems are latched.

Furthermore, according to EASA CS 25.783d (5), locking members such as locking cams must be provided for locking the latching systems in the associated latched state. However, any positioning of the locking members in a locking position, wherein the locking members lock e. g. latching hooks, must be prevented as long as the latching systems are not in their associated latched state.

For instance, the document ITRM 20120642 A1 describes a mechanism for closing aircraft doors which comprises a plurality of attachment devices positioned along a closing line. Each attachment device comprises at least one retaining element, fixable to the fuselage of an aircraft and having a concavity defining a housing seat, and a closing pin applicable to a door of an aircraft and engageable inside the housing seat for locking the door relative to the fuselage. As common opening movement of the door is outward and upward rotating which requires closing latches for the interfaces at the sides and the bottom of the door, the bottom latches are significantly loaded by the circumferential loads introduced by the inner pressure to the fuselage.

The document US 8 827 325 B2 describes a locking mechanism for a cargo door in a fuselage cell which comprises a number of fuselage cell fitments which are disposed in the area of a loading edge of the cargo door and a corresponding number of cargo door fitments which are fixed in the area of a lower edge of the cargo door. These pairs of fitments are designed to transfer the main portion of occurring interface load. An additional sliding element finally locks the pair of fitments for a respective radial load component. Unfortunately, such sliding elements are sensitive for dirt, ice or structural deformation. In addition, for pivotable opening doors a required swivel motion necessitates an angled contact surface for circumferential loads resulting in high additional loads to the sliding element.

The document US 10 829 969 B2 describes a locking device which comprises a hook, a clevis and a latching shaft with a section. Depended on a rotational position of the latching shaft, the hook is free to move in or out of the clevis or is trapped by the latching shaft and clevis. A second shaft adds an independent lock function to secure the latch shaft in closed position.

The document DE 198 25 405 C2 describes a conventional actuating system for an actuatable door that fulfills the requirements according to EASA CS 25.783d and comprises a plurality of latching devices, each being provided with an associated latching hook that is adapted for latching the actuatable door in a closed position. Each latching hook can be locked in its latched state by means of a separate rotatable locking device, which is implemented as a locking cam.

The document US 5 823 473 A, in turn, describes a latch-lock mechanism for an airplane cargo door. The latch-lock mechanism includes straight-through drive shafts rotated by a common powered drive unit. Affixed to the outer ends of the drive shafts are pull-in hooks that co-act with pull-in pins affixed to the fuselage of the airplane adjacent to the sides of the cargo door opening. The co-action between the pull-in hooks and the pull-in pins pulls the cargo door into a closed position against a distorted fuselage cargo door opening. During opening, the co-action between the pull-in hooks and the pull-in pins forces the door opening against ice jams. After being pulled into a closed position, latch cams rotated by the drive shafts are closed around latch pins. However, with such latch-lock mechanism, local bending loads to the structure are high and may need to be compensated, especially in case of interface failure.

Exemplary other mechanisms for closing aircraft doors are described in the documents EP 3 045 387 A1 and EP 3 871 971 A1. More specifically, EP 3 045 387 A1 describes an actuating system for latching and locking an actuatable door in a closed position. The actuating system comprises at least one latching device with a latching hook. The latching hook is pivotally mounted to an associated pivot bearing and connected to a pivotable mechanical transmission element via a coupling link. In operation of the latching device and, more particularly, for pivoting the latching hook from a corresponding releasing position into its latched position, during a respective latching procedure, a rotatable latching shaft is rotated by means of the latching device in a latching rotation direction, thereby pushing the coupling link towards the latching hook, which is, thus pivoted around the associated pivot bearing in the latching rotation direction until it is locked at a counter peg.

Similarly, EP 3 871 971 A1 describes an actuating system for an actuatable door. The actuating system comprises a rotatable latching shaft, a rotatable locking shaft, a latching device, and a locking device. The latching device comprises a latch that is adapted to maintain the actuatable door in a closed position. The locking device comprises a locking cam that is mounted to the locking shaft and adapted to engage with the latch in a closed and latched position. The latching device also comprises a latch securing lever that is driven by the locking cam and adapted to engage with the latch to maintain the latch in a closed and secured position.

The hook-based systems described in DE 198 25 405 C2, EP 3 045 387 A1 or EP 3 871 971 A1 have comparatively robust latching systems, but face the issue that latching hooks are usually heavy single parts related to their internal bending loads and an associated space requirement for respective unlatching/latching movements has a negative impact on an overall fuselage structural weight. For pivotable opening doors, such as cargo doors, such a high part weight at the bottom of the door with its long lever arm compared to an associated door pivot axis, results in a significant impact on forces needed to drive a required door swiveling movement.

C-Latch based systems as described in US 5 823 473 A, in turn, skip the issues for the internal bending loads of latching hooks, but induce bending loads at the interface itself as well as to respectively surrounding elements with related negative impacts on weight and robustness.

It is, therefore, an object of the present invention to provide a new actuatable door which overcomes the drawbacks of the conventional actuatable doors and which relieves direct and indirect weight impacts of conventional latching hook-based systems while maintaining all characteristics supporting their robustness. Furthermore, it is an object of the present invention to provide a new aircraft comprising such a new actuatable door. One of the above-described objects is solved by an actuatable door comprising the features of claim 1.

More specifically, according to the present invention an actuatable door for an aircraft is pivotally mounted to a support structure, such as e. g. a fuselage of the aircraft. The actuatable door is pivotable in a door opening swivel direction from a closed position in the support structure toward an open position. The actuatable door comprises an actuating system with at least one latching device that comprises a latching bracket adapted for blocking the actuatable door in the closed position. The latching bracket is pivotally mounted to a pivot bearing and connected to a pivotable mechanical transmission element via a coupling link. The coupling link is pivotally mounted to the latching bracket and to the pivotable mechanical transmission element. The pivotable mechanical transmission element is coupled to a rotatable latching shaft. Rotation of the rotatable latching shaft in an unlatching rotation direction results in pivoting of the pivotable mechanical transmission element in the unlatching rotation direction and pivoting of the latching bracket in a bracket unlatching swivel direction. The bracket unlatching swivel direction and the door opening swivel direction are identical.

Advantageously, the actuatable door with the actuating system according to the present invention comprises a latching device with a reduced number of constituent components compared to the above described conventional actuating systems, while still fulfilling all relevant requirements defined by the competent authorities, such as e. g. in EASA CS 25.783.

More specifically, according to the present invention, the at least one latching device with the latching bracket is set as moveable part of the actuatable door, in particular as a spool with its bracket. Such configuration realizes a new type of closing latch at a unique direction of movement. Furthermore, an associated hook for the spool may be fixed to the fuselage and surrounding geometries may be adopted to realize simplifications for door and fuselage structure to significantly reduce the weight. As such, lower weight and simpler parts (e. g., no frame fork) for the door and the fuselage at lower space constraints is advantageously achieved. Moreover, lower weight at the bottom side of the door may significantly improve load conditions for the door actuator and related components and structures.

In other words, the common components, e. g. the hook-spool system described in the document EP 3 045 387 A1, may advantageously be used as baseline with inverted hook and spool locations. Furthermore, the hook may also be adopted to ensure a form fit for the inventive system in closed condition and the surrounding geometries may be adopted to realize simplifications for door and fuselage structure.

Due to these differences, the inventive actuating system is lighter, requires less installation space, and is simpler and cheaper than the one known from the conventional actuating system. Consequently, the inventive actuatable door as a whole is lighter, requires less installation space, and is simpler and cheaper than the conventional actuatable door.

Advantageously, an associated handle part for manually actuating the actuating system according to the present invention can be implemented up to the rotatable latching shaft by means of a conventional handle part that is, e. g., described in the document EP 3 871 971 A1. Thus, an initial or initiating rotation of the rotatable latching shaft may be realized manually, i. e. by hand force. If desired, the actuating device may include any device that is able to actuate, respectively rotate, the rotatable actuating shaft. For example, suitable actuating devices may include a wheel, a knob, or a motor and any other device that is able to control the motor.

According to some embodiments, in the closed position of the actuatable door, the latching bracket may be blockable in a blocked position on a fixed hook. By way of example, the fixed hook may be rigidly attached to the support structure, in particular to the fuselage of an aircraft.

Advantageously, the benefit of the new setup is the reduction in complexity for structural parts like a door sided latching device descried in document EP 3 871 971 A1. Furthermore, unlike the actuating system in document EP 3 871 971 A1, no component is required to move inward for latching/unlatching such that space requirements for the present invention are reduced. This allows to improve the structural design near the door cut-out as the fixed hook could also be fixed in radial direction (not only in circumferential) and improves the load condition for the hook sizing.

According to some embodiments, the pivot bearing may be mounted to a door frame for pivotally connecting the latching bracket to the door frame.

According to some embodiments, in the blocked position of the latching bracket, the latching bracket may block the door frame on the fixed hook.

According to some embodiments, in the closed position of the actuatable door, the door frame may form a form fit with the fixed hook.

According to some embodiments, a door stopper may be provided on the fixed hook for limiting a closing movement of the door frame on the fixed hook.

According to some embodiments, at least one locking device with a locking cam may be provided for locking the latching bracket in the blocked position in a locked state.

According to some embodiments, a seal may be provided for sealing the door frame against the support structure in the closed position of the actuatable door.

Advantageously, the elements of the door stopper, the at least one locking device with a locking cam, the pivotable mechanical transmission element, the coupling link, the door frame, and the seal that is associated with the actuatable door according to the present invention can also be implemented by the configuration that is, e. g., described in the documents EP 3 045 387 A1 and EP 3 871 971 A1 with adaptations to the new geometrical conditions.

According to some embodiments, the latching bracket may comprise a spool provided for rolling on the fixed hook.

According to some embodiments, the door frame may be pivotally connected via the pivot bearing to latching bracket arms.

According to some embodiments, the latching bracket arms may be rigidly attached to a plate-shaped bracket cover.

According to some embodiments, the latching bracket arms may be integrally formed with a plate-shaped bracket cover.

According to some embodiments, the latching bracket arms may be connected to a spool support shaft on which the spool is rotatably arranged.

According to some embodiments, the spool support shaft may be secured to the latching bracket arms by means of associated securing means.

Having regard to aircrafts and pivotable swiveling aircraft doors, the present invention is based on the principle of providing a latching system for an actuatable door, such as a cargo door. The latching system preferably comprises a fixed hook that is rigidly attached to or integrated into an aircraft fuselage as hook element, and a latching device that is driven by an actuating system of the actuatable door. Respective driving components may be similar to those described e.g. in EP 3 045 387 A1 or EP 3 871 971 A1.

Preferably, the latching device comprises a latching bracket which is set as a spool bracket element that is pivotally mounted to a pivot bearing and comprises at least two latching bracket arms for transferring interface loads from a spool support shaft associated to a pivot bearing. Opening of the latching device is in radial outward direction with an associated hook detailed contour of the fixed hook for the spool contact area being based on a predetermined spool swivel path while latching or unlatching motion in door closed position.

The spool may be rotatably arranged at the spool support shaft to act as consumable wear protection element for a respective hook interface of the spool bracket element.

The spool support shaft may be an eccentric element to rig an associated interface gap. Such an eccentric element preferably comprises an excenter pin or an excenter bush or a combination of both.

An underlying form fit margin of the latching system may be the interference of a given swivel path of the spool bracket element in latched condition for a required pivotable door motion with an associated contour of the fixed hook. This form fit margin blocks the spool and consequently the actuatable door for the opening motion when the latching device is engaged. Hereby, the latching device preferably faces a closing torque complying with EASA CS 25.783d (2). At circumferential loads, as being dominant for cargo doors at pressurized flight, the form fit margin forms a trap for the spool bracket element and, therefore, secures the latching system.

Basically, no opening or closing moment is applied to the actuatable door when an associated vector of spool axis and pivot bearing axis is in line with a given interface load vector.

The spool axis may be placed more inward with a separate door stopper for compensating a resulting closing moment to the actuatable door. This causes an enforced and adjustable position of the actuatable door during pressurized flight. Furthermore, a more inward position of the spool bracket element has an additional positive impact on the form fit margin.

Advantageously, the relieve in space limitations for the fixed hook and the opportunity of additional support by the surrounding structure allows a more lightweight design.

Advantageously, the fuselage benefits from the omission of a free space requirement for the latching movement as well as the opportunity for reducing the actuatable door cutout resulting in a cheaper and more lightweight fuselage structure.

Advantageously, no frame fork is needed for a respective bottom section of the door structure reducing weight and costs.

Advantageously, weight benefits due to latch and door structure at the bottom section of the door structure significantly reduce forces required for door swiveling motion with positive impact on weight and costs of related actuator and surrounding parts.

Furthermore, a provided contour of the fixed hook towards the door structure may be formed based on a nominal opening path of the actuatable door, thus, resulting in a dedicated gap. This gap is advantageously smaller than the form fit margin and secures the latching device for preventing door opening even in case of massive structural failure of the actuatable door.

Advantageously, the latching bracket arms may be attached rigidly to a plate-shaped bracket cover. The latching bracket arms may be integrally formed with a plate-shaped bracket cover.

Furthermore, the pivot bearing may be mounted to a door frame for pivotally connecting the latching bracket to the door frame.

Moreover, the spool support shaft may be secured to the latching bracket arms by means of associated securing means.

Another one of the above-described objects is solved by an aircraft comprising the features of claim 15. More specifically, the aircraft comprises a fuselage and an actuatable door that is pivotally mounted to the fuselage. The actuatable door is pivotable in a door opening swivel direction from a closed position in the fuselage toward an open position. The actuatable door comprises an actuating system with at least one latching device that comprises a latching bracket adapted for blocking the actuatable door in the closed position. The latching bracket is pivotally mounted to a pivot bearing and connected to a pivotable mechanical transmission element via a coupling link. The coupling link is pivotally mounted to the latching bracket and to the pivotable mechanical transmission element. The pivotable mechanical transmission element is coupled to a rotatable latching shaft. Rotation of the rotatable latching shaft in an unlatching rotation direction results in pivoting of the pivotable mechanical transmission element in the unlatching rotation direction and pivoting of the latching bracket in a bracket unlatching swivel direction. The bracket unlatching swivel direction and the door opening swivel direction are identical.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a cross-sectional schematic view of an aircraft with a fuselage, wherein actuatable doors according to the present invention are pivotally mounted to the fuselage, by way of example,
- Figure 2 shows a detail view of the actuatable door of Figure 1 in a closed position showing an outer skin of the actuatable door,
- Figure 3 shows a sectional schematic view of the actuatable door of Figure 1 in a locked state, wherein a latching bracket blocks the actuatable door of Figure 1 in the closed position on a fixed hook,
- Figure 4 shows the actuatable door of Figure 3 in an unlocked state,
- Figure 5 shows a sectional schematic view of the actuatable door of Figure 3, wherein the sectional view is seen along line A-A of Figure 3,
- Figure 6 shows a sectional schematic view of a detail of the latching bracket of Figure 5 blocked on the fixed hook of Figure 3,
- Figure 7 shows the actuatable door of Figure 3 in transition from the locked state via the unlocked state to an open state, and
- Figure 8 shows different pressure load applications on the actuatable door of Figure 1 in the locked state.

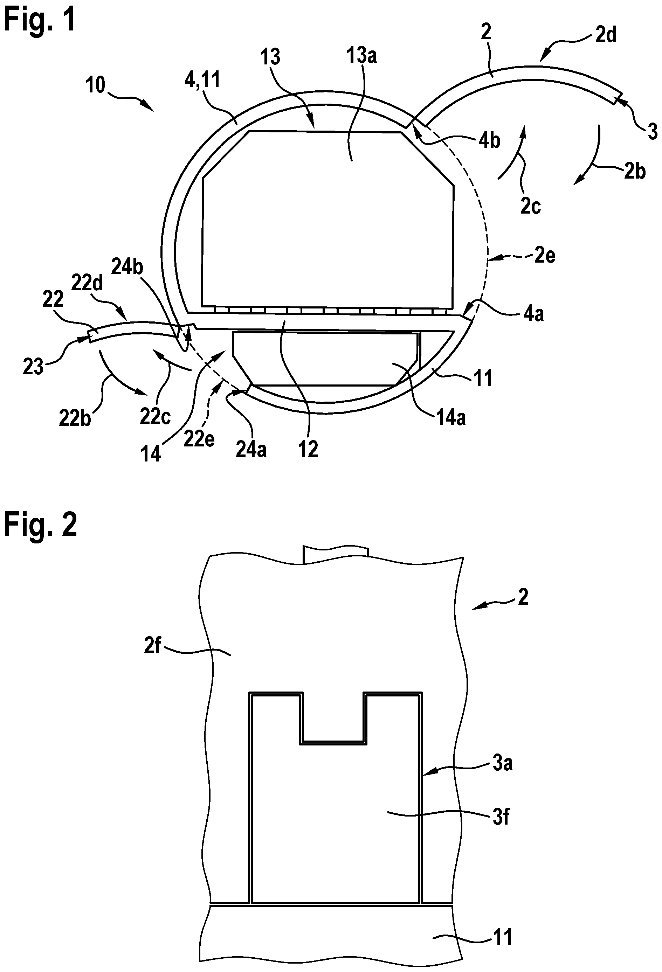

Figure 1 shows an illustrative aircraft 10, such as e. g. an airplane, with a fuselage 11. The aircraft 10 comprises an actuatable door 2 that is pivotally mounted to a support structure 4 according to the present invention.

By way of example, the support structure 4 is embodied by the fuselage 11 such that the actuatable door 2 is directly mounted to the fuselage 11. Accordingly, hereinafter any reference to the fuselage 11 should be considered as a reference to the support structure 4 and *vice versa.* However, it should be noted that various other support structures can also be equipped with the actuatable door 2, so that the present invention should not be construed as being restricted to use of the actuatable door 2 with the fuselage 11 of the aircraft 10. Instead, the actuatable door 2 may likewise be mounted to other vessels, such as busses, ships and so on, and particular door frames may be foreseen as support structures.

The actuatable door 2 is preferably adapted for being reliably and securely locked in the support structure 4 in a closed position 2e such that the actuatable door 2 preferentially fulfills all relevant requirements defined by the competent authorities, such as e. g. described in EASA CS 25.783. More generally, the actuatable door 2 is preferably adapted to close an associated door mounting structure, such as the fuselage 11 of the aircraft 10, preferentially in a fluid-tight manner. In particular, the actuatable door 2 may be a cargo door. However, it should be noted that the use of the actuatable door 2 is not restricted to use as a cargo door in an aircraft.

Illustratively, the actuatable door 2 for the aircraft 10 is pivotally mounted to the support structure 4 and pivotable in a door opening swivel direction 2c from the closed position 2e in the support structure 4 toward an open position 2d. Likewise, the actuatable door 2 is also pivotable in a door closing swivel direction 2b from the open position 2d toward the closed position 2e in the support structure 4.

By way of example, the aircraft 10 may comprise a floor 12. An upper cargo compartment 13 may be provided within the fuselage 11 above the floor 12 and a lower cargo compartment 14 may be provided within the fuselage 11 below the floor 12. By way of example, cargos 13a, 14a are respectively conveyed in the cargo compartments 13, 14.

Illustratively, the actuatable door 2 is an upper cargo door that is pivotally mounted to the fuselage 11 via a hinge structure 4b. By way of example, the actuatable door 2 is pivotable in a door closing swivel direction 2b, illustratively in clockwise direction, from the open position 2d to the closed position 2e for closing the upper cargo compartment 13, and in a door opening swivel direction 2c from the closed position 2e in the support structure 4 toward the open position 2d, illustratively in counterclockwise direction. In the closed position 2e of the actuatable door 2, the latter may be blocked and latched by means of a latching device 3 on a fixed hook 4a provided on the fuselage 11.

If desired, an additional actuatable door 22 may be provided as a lower cargo door pivotally mounted to the fuselage 11 via a hinge structure 24b. The additional actuatable door 22 is illustratively pivotable in a door opening swivel direction 22c, by way of example in the clockwise direction, from a closed position 22e in the support structure 4 toward an open position 22d, and pivotable in a door closing swivel direction 22b, by way of example in the clockwise direction, from the open position 22d to the closed position 22e for closing the lower cargo compartment 14. Similar to the actuatable door 2, in the closed position 22e of the actuatable door 22, the latter may be blocked and latched by means of a latching device 23 on an additional fixed hook 24a provided on the fuselage 11.

Preferably, the actuatable doors 2, 22 for the cargo compartments 13, 14 are embodied with similar components. Therefore, with respect to Figure 2 to Figure 8, only the actuatable door 2 is representatively described in more detail. However, it should be noted that due to the different sizes of the actuatable doors 2, 22 there may be differences in associated properties such as opening angles and mean pressure planes. However, those skilled in the art readily understand from the disclosure of the present invention that these differences do not adversely affect the implementation with similar components. In other words, the specific construction described below in the example of the actuatable door 2 can be similarly implemented for the actuatable door 22, as well as actuatable doors with other sizes, opening angles, and mean pressure planes.

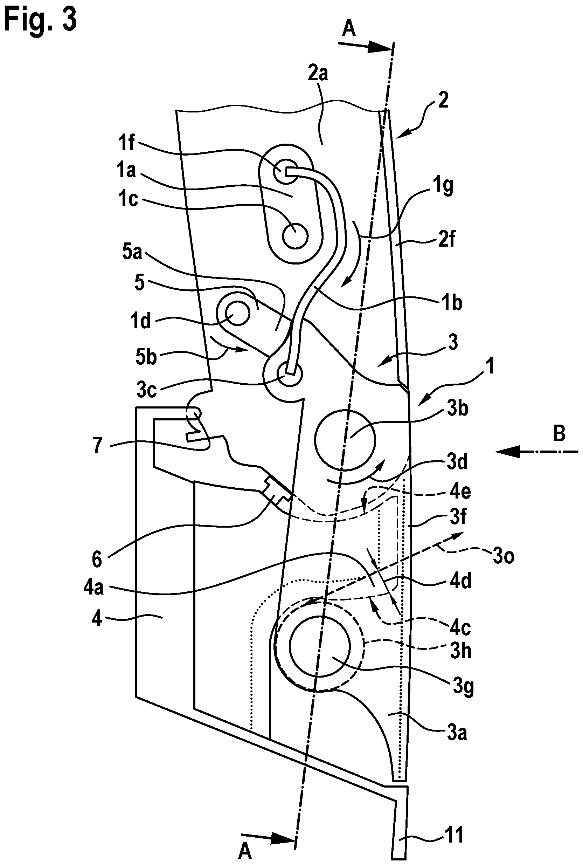

Figure 2 shows the actuatable door 2 in the fuselage 11 of Figure 1 in the closed position 2e of Figure 1, seen from the outside of the fuselage 11, i. e. in a viewing direction B illustrated in Figure 3. The actuatable door 2 illustratively comprises a door outer skin 2f and a latching bracket 3a with an outer bracket cover 3f. The door outer skin 2f and the outer bracket cover 3f are preferably aligned in the closed position 2e of the actuatable door 2.

Illustratively, the outer bracket cover 3f is shaped in a way to enable a latching/unlatching movement without contact to the door outer skin 2f as well as to form an aerosmooth outer loft with minimum gaps and steps between the door outer skin 2f and the outer bracket cover 3f in latched condition.

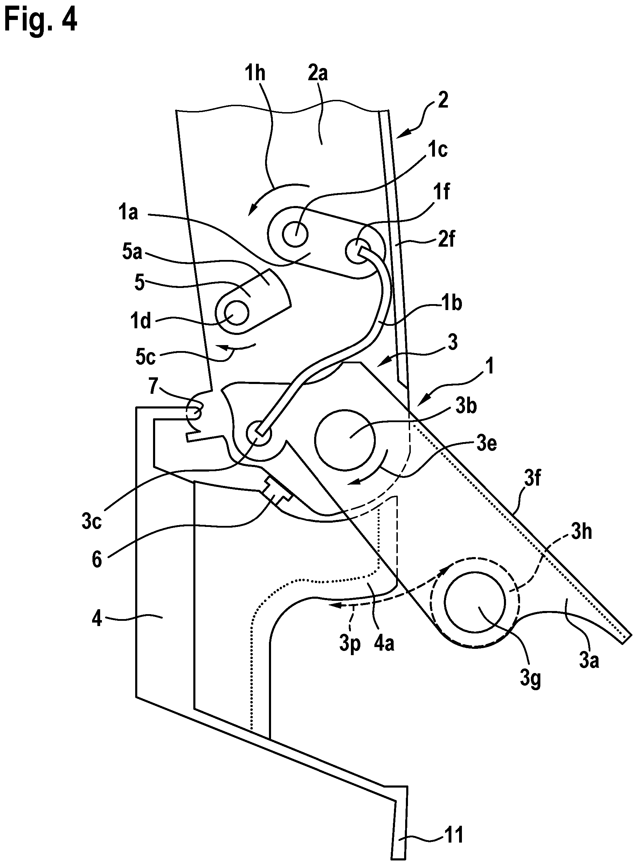

Figure 3 and Figure 4 show the actuatable door 2 in the closed position 2e of Figure 1 in the fuselage 11 of Figure 1, according to Figure 2, and are commonly described hereinafter. According to the present invention, the actuatable door 2 comprises an actuating system 1 with at least one latching device 3. Illustratively, the actuatable door 2 comprises the door outer skin 2f of Figure 2, and the latching device 3 comprises the latching bracket 3a and the outer bracket cover 3f of Figure 2.

As shown in Figure 3, in the closed position 2e of the actuatable door 2 the latching bracket 3a may be blocked in a blocked position on a fixed hook 4a that is rigidly attached to the support structure 4 of Figure 1. Furthermore, the actuatable door 2 may be locked or unlocked in the closed position 2e, as illustrated in Figure 3 and Figure 4 and described below. When the actuatable door 2 is unlocked and the latching bracket 3a is moved away from the fixed hook 4a and, thus, not blocked in the blocked position on the fixed hook 4a, as shown in Figure 4, the actuatable door 2 is ready to be opened, but may still remain in the closed position 2e, as shown in Figure 4.

According to the present invention, latching bracket 3a is pivotally mounted to a pivot bearing 3b and connected to a pivotable mechanical transmission element 1a via a coupling link 1b. The coupling link 1b is pivotally mounted to the latching bracket 3a and to the pivotable mechanical transmission element 1a. Illustratively, one end of the coupling link 1b may be pivotally mounted to the pivotable mechanical transmission element 1a by means of a coupling link connecting element 1f, whereas another end of the coupling link 1b may be pivotally mounted to the latching hook 3a by means of a latching bracket connecting element 3c.

The pivotable mechanical transmission element 1a is preferably rigidly coupled to a rotatable latching shaft 1c. Preferably, the rotatable latching shaft 1c, the pivotable mechanical transmission element 1a, and the coupling link connecting element 1f form a bell crank.

As shown in Figure 3, rotation of the rotatable latching shaft 1c in an unlatching rotation direction 1g results in pivoting of the pivotable mechanical transmission element 1a in the unlatching rotation direction 1g. Correspondingly, as shown in Figure 4, rotation of the rotatable latching shaft 1c in a latching rotation direction 1h results in pivoting of the pivotable mechanical transmission element 1a in the latching rotation direction 1h, which may be transformed, via the coupling link 1b, into a rotation of the latching bracket 3a around the latching bracket pivot bearing 3b in a latching swivel direction 3e to bring the outer bracket cover 3f of the latching device 3 into alignment with the door outer skin 2f, as shown in Figure 3.

Illustratively, the actuatable door 2 comprises a door frame 2a that is rigidly attached to the door outer skin 2f. The pivot bearing 3b may be mounted to the door frame 2a for pivotally connecting the latching bracket 3a to the door frame 2a. By way of example, in the closed position 2e of the actuatable door 2, the door frame 2a and, more particularly, the latching bracket 3a and the fixed hook 4a are ready to form a form fit, but are illustratively spaced apart by a gap. More specifically, a hook-sided contour 4e is adapted to a corresponding door-sided contour such that a gap is formed between the door frame 2a and the fixed hook 4a which is smaller than the form fit margin 4d to ensure that in any case of structural failure of the actuatable door 2 or support structure 4, i. e. the fuselage 11, no relative movement between the actuatable door 2 or the support structure 4, i. e. the fuselage 11, in circumferential direction will be able to unlatch the latching system formed by the latching device 3 and the fixed hook 4a.

Preferably, in the blocked position of the latching bracket 3a, the latching bracket 3a may block the door frame 2a on the fixed hook 4a. If desired, the latching bracket 3a may comprise a spool 3h provided for rolling on the fixed hook 4a. Illustratively, the spool 3h may be rotatably arranged on a spool support shaft 3g mounted to the latching bracket 3a.

Illustratively, a respective spool motion path for door opening movement in latched condition 3o interferes with a provided spool interface area 4c of the fixed hook 4a with a maximum depth of this interference being a form fit margin 4d of the latching system formed by the latching device 3 and the fixed hook 4a. With reference to Figure 1, it should be noted that for lower and upper deck cargo doors the relevant section of the spool motion path for door opening movement in latched condition 3o is almost linear and is angled with respect to the fuselage 11 in radial outward direction. A respective angle may be in the range of 10° to 20° for lower deck cargo doors and may exceed 45° for upper deck cargo doors. The illustrations in Figure 3 and Figure 4 are based on an initial opening angle of approximately 20°.

As shown in Figure 4, the spool interface area 4c will be based on a respective spool motion path for latching in door closed condition 3p to compromise a smooth latching/unlatching movement with a high form fit margin 4d.

Furthermore, as also shown in Figure 3, at least one locking device 5 with a locking cam 5a may be provided for locking the latching bracket 3a in the blocked position in a locked state. Illustratively, the locking cam 5a may be pivotally mounted to the door frame 2a by means of a locking shaft 1d.

More specifically, the locking cam 5a may be rotated in an unlocking swivel direction 5b to allow the latching bracket 3a to be released from the blocked position. The latching bracket 3a may then be rotated around the latching bracket pivot bearing 3b in an unlatching swivel direction 3d to unlock the actuatable door 2 to reach the intermediate state shown in Figure 4.

Correspondingly, the latching bracket 3a as shown in Figure 4 may be rotated in the latching swivel direction 3e around the latching bracket pivot bearing 3b to return to the blocked position as shown in Figure 3. The locking cam 5a may then be rotated back in a locking swivel direction 5c to block the latching bracket 3a in the blocked position to reach the locked state of Figure 3.

If desired, a door stopper 6 may be provided on the fixed hook 4a for limiting a closing movement of the door frame 2a on the fixed hook 4a. By way of example, a seal 7 may be provided for sealing the door frame 2a against the support structure 4 in the closed position 2e of the actuatable door 2, i. e. for sealing the actuatable door 2 in the closed position 2e in order to achieve preferentially a fluid-tight condition with respect of the fuselage 11. As such, the actuatable door 2 may be held in the closed position 2e with a gap between the door frame 2a and the support structure 4 which is sealed by the seal 7, regardless in the locked state in Figure 3 or in the unlocked stated in Figure 4.

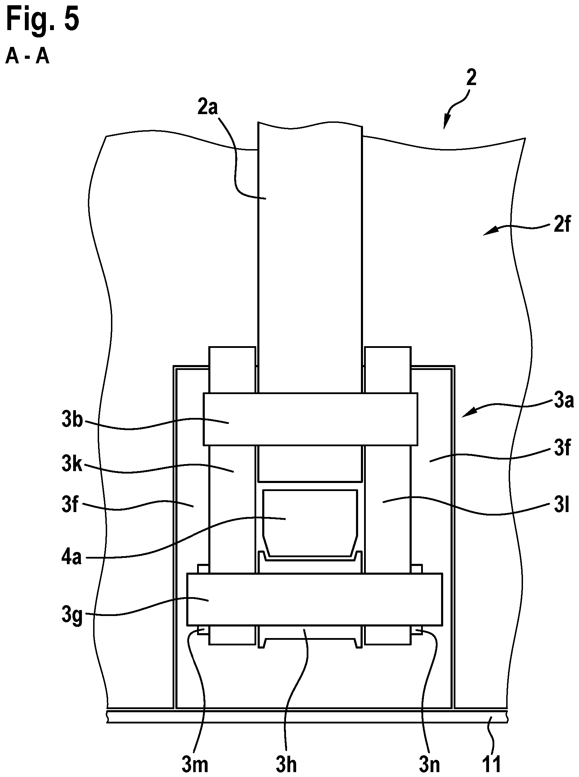

Figure 5 shows the actuatable door 2 with the door frame 2a and the latching bracket 3a of Figure 3 and Figure 4 viewed from inside of the support structure 4, i. e. the fuselage 11 of Figure 3 and Figure 4. Illustratively, the door frame 2a is pivotally connected via the pivot bearing 3b to latching bracket arms 3k, 3l. By way of example, the latching bracket arms 3k, 3l are connected to a spool support shaft 3g and rigidly attached to the outer bracket cover 3f of Figure 3 and Figure 4, which is illustratively a plate-shaped bracket cover. Alternatively, the latching bracket arms 3k, 3l may be integrally formed with the plate-shaped bracket cover 3f.

If desired, the latching bracket 3a may be an integral part consisting of the latching bracket arms 3k, 3l transferring the load between the pivot bearing 3b and the spool support shaft 3g as well as the outer bracket cover 3f.

The outer bracket cover 3f may be opened for a latching movement. By way of example, the coupling link 1b and the locking cam 5a of Figure 3 and Figure 4 are acting directly on at least one of the latching bracket arms 3k, 3l of the latching device 3.

Illustratively, the latching bracket arms 3k, 3l are rigidly attached to the spool support shaft 3g. If desired, the spool support shaft 3g may be secured to the latching bracket arms 3k, 3l by means of associated securing means 3m, 3n. By way of example, a spool 3h is rotatably arranged on the spool support shaft 3g such that the spool 3h may roll on the fixed hook 4a of Figure 3 and Figure 4.

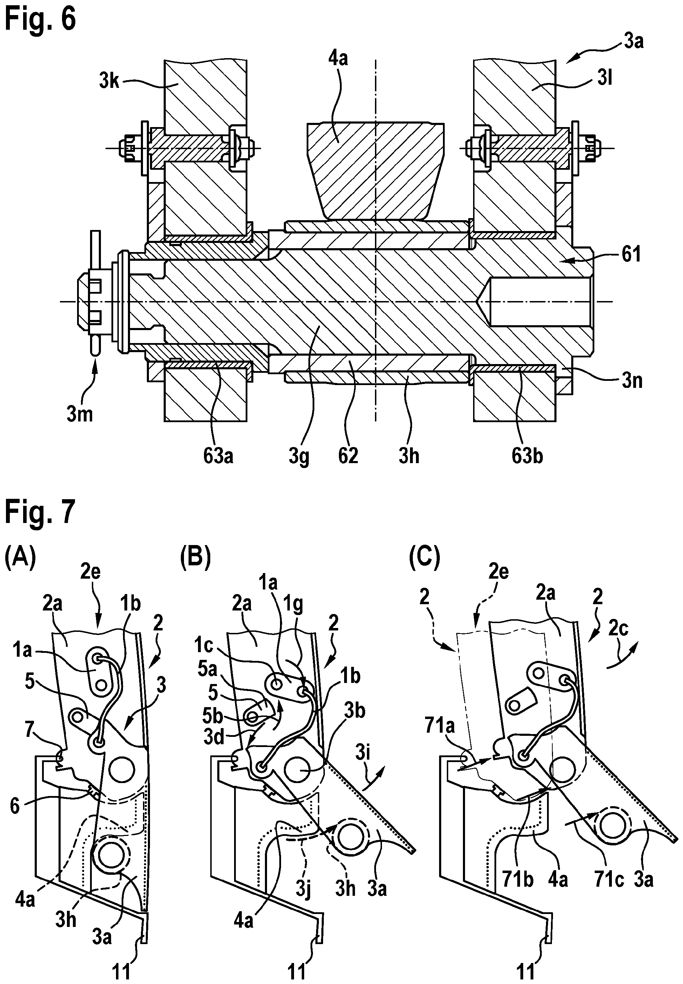

Figure 6 shows an illustrative realization of the latching bracket 3a with the latching bracket arms 3k, 3l, the spool support shaft 3g, the securing means 3m, 3n, and the spool 3h of Figure 5 in latched condition, which is engaged, i. e. blocked on the fixed hook 4a by way of example. As shown in Figure 6, the rigging of the spool 3h to finetune the gaps between the spool 3h and the fixed hook 4a may be realized with an excenter pin 61 and an excenter bushing 62 used for implementing the spool support shaft 3g. By way of example, the collar of the excenter pin 61 represents the securing means 3n on the right as well as the castle nut and related washer represents the securing means 3m on the left.

If desired, the spool 3h may be a non-structural interface layer. Illustratively, support sleeves 63a, 63b may be provided to prevent wear and scratch damages on the surface of the spool 3h during opening and latching movements of the latching bracket 3a.

Figure 7 shows in parts (A) to (C) an illustrative opening movement of the actuatable door 2 of Figure 1 to Figure 5. Illustratively, the actuatable door 2 in part (A) of Figure 7 is shown in the closed position 2e according to Figure 3, wherein the latching bracket 3a is blocked in the blocked position on the fixed hook 4a.

For opening the actuatable door 2, the locking cam 5a of the locking device 5 must be rotated in the unlocking swivel direction 5b to allow the latching bracket 3a to be released from the blocked position. Thereafter, the pivotable mechanical transmission element 1a that is coupled to the rotatable latching shaft 1c must be rotated by rotating the rotatable latching shaft 1c in the unlatching rotation direction 1g to pivot the pivotable mechanical transmission element 1a in the unlatching rotation direction 1g. The rotation of the rotatable latching shaft 1c in the unlatching rotation direction 1g results in pivoting of the latching bracket 3a in a bracket unlatching swivel direction 3i. Illustratively, the movement of the coupling link 1b transmits the rotation of the pivotable mechanical transmission element 1a in the unlatching rotation direction 1g to the latching bracket 3a such that the latching bracket 3a pivots around the pivot bearing 3b in the bracket unlatching swivel direction 3i. During the pivoting of the latching bracket 3a in the bracket unlatching swivel direction 3i, the spool 3h may roll along the fixed hook 4a in a spool opening rolling direction 3j.

The actuatable door 2 is, then, in an intermediate position as shown in part (B) of Figure 7. More specifically, this intermediate position corresponds to the closed position 2e according to Figure 4, wherein only the latching bracket 3a is pivoted and no longer blocked in the blocked position on the fixed hook 4a.

With the latching bracket 3a pivoted as shown in part (B) of Figure 7, a door opening movement of the actuatable door 2 as such may then be performed as illustrated in part (C) of Figure 7. As illustrated, in the door opening movement the actuatable door 2 is moved away from the fixed hook 4a in a door opening movement direction illustrated with arrows 71a, 71b, 71c, and the actuatable door 2 is moved from the closed position 2e toward the open position 2d of Figure 1.

Illustratively, during the door opening movement the actuatable door 2 is pivoted in the door opening swivel direction 2c of Figure 1. According to the present invention, the door opening swivel direction 2c and the bracket unlatching swivel direction 3i illustrated in part (B) of Figure 7 are identical, i. e. illustratively pointing in the counterclockwise direction. While the actuatable door 2 is pivoting in the door opening swivel direction 2c, it is moving away from the fuselage 11 together with the latching bracket 3a in the door opening movement direction illustrated with the arrows 71a, 71b, 71c, as described above.

Closing of the actuatable door 2 requires an inversion of the above-described opening actions in the inverse direction, i. e. starting from part (C) of Figure 7 and moving to part (A) of Figure 7. More specifically, starting at part (C) of Figure 7 the actuatable door 2 is firstly moved e. g. by a door actuator towards the fuselage 11 until it is stopped at the door stopper 6. Optionally, a separate pull-in feature may be provided therefore. After the actuatable door 2 is stopped at the fuselage 11, the latching bracket 3a is rotated back to its blocked position on the fixed hook 4a by the rotation of the rotatable latching shaft 1c via the coupling link 1b to reach the blocked position as shown in part (B) of Figure 7. The latching bracket 3a is then latched by the locking cam 5a as shown in part (A) of Figure 7 for locking the actuatable door 2 in the locked state in the closed position 2e on the fuselage 11.

As the latching device 3 with the latching bracket 3a does not have to withstand internal high bending loads - as it is given for a conventional hook -, the latching device 3 can be much lighter. Considering the long force arm between the latching device 3 at the bottom of the actuatable door 2 and the hinge structure 4b at the top of the actuatable door 2 as shown in Figure 1, the impact of this weight reduction of the latching device 3 on the opening moment is significant. Consequently, the actuator size as well as any part exposed to the actuator loads will be improved significantly.

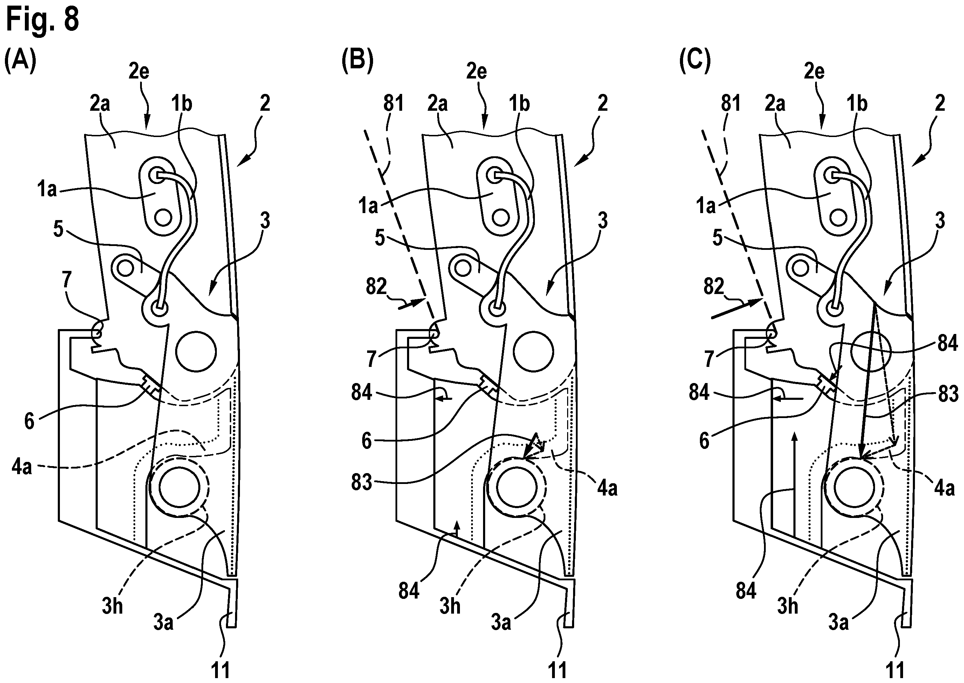

Figure 8 shows in parts (A) to (C) different pressure load applications on the actuatable door 2 of Figure 1 in the locked state. More specifically, no load is applied to the actuatable door 2 in the closed position 2e illustrated in part (A) of Figure 8, a relative low load is applied to the actuatable door 2 in the closed position 2e illustrated in part (B) of Figure 8, and a relative high load is applied to the actuatable door 2 in the closed position 2e illustrated in part (C) of Figure 8.

With reference to Figure 1 and Figure 8, typical conditions for lower and upper deck cargo doors are shown with their different opening angles with respect to the actuatable door 2, representative for all actuatable doors according to the present invention. The gap between fixed hook 4a and the door frame 2a in part (A) of Figure 8 is illustratively shown according to an opening movement angle of e. g. 45°, which is provided for the actuatable door 2, i. e. the upper cargo door in Figure 1. For the lower cargo door, i. e. the actuatable door 22 of Figure 1, an opening movement angle may be 20°.

It should be noted that this gap is not mandatory for the typical load case for the interface formed by spool 3h and fixed hook 4a of Figure 2 to Figure 7. However, such feature would increase the means of safety by ensuring a form fit margin that could not be reduced critically by any failure of the door structure. More specifically, the door frame 2a and therefore the latching bracket pivot bearing 3b are enforced to follow the nominal opening direction and the form fit margin is reduced by the gap value in maximum.

Illustratively, according to part (B) of Figure 8 the load application is illustrated with a mean pressure plane 81 of the actuatable door 2. The mean pressure plane 81 is a projected surface of the pressure application to the actuatable door 2 with the resultant pressure force being like the related pressure that would be applied to this surface only. Any other load component by the pressure applied to the curved shape of the actuatable door 2 is balanced within the door structure itself.

As shown in part (B) of Figure 8, at initial pressurization the gap between the spool 3h and the fixed hook 4a will allow the actuatable door 2 to move slightly in the door opening swivel direction 2c of Figure 7(C) due to an inner pressure 82 in the fuselage 11 until the gap is closed and the spool 3h is in contact with the fixed hook 4a. Thereby, a respective contact force introduces a closing moment to the latching device 3. According to the stiffness of the actuatable door 2 and the door surrounding section of the fuselage 11, the form fit margin (4d in Figure 3) will result in some circumferential loads 84 until the loads to the latch bracket 3a are in an equilibrium state.

While further pressurization as shown in part (C) of Figure 8, the circumferential loads 84 from the pressurization of the fuselage 11 are dominating the interface loads 83 so that the actuatable door 2 is pulled inward until the closing moment is balanced by the door stopper 6 or until the vector of pivot bearing 3b to the spool support shaft (3g in figure 6) is in line with the vector of a respective interface load 83.

It should be noted that the above described embodiments are merely described to illustrate possible embodiments of the present invention, but not in order to restrict the present invention thereto. Instead, multiple modifications and variations of the above described embodiments are possible and should, therefore, also be considered as being part of the invention.

For instance, the actuating system 1 described above may comprise one or more additional locking devices 5, which may be beneficial in case of a failure of the first locking device 5. Moreover, the actuating system 1 of Figure 3 shows only one latching device 3 due to the viewing angle. However, the actuating system 1 may have any number of latching devices 3. For example, the actuating system 1 may have two or more latching devices 3. Furthermore, the support structure 4 of Figure 3 is shown together with the fuselage 11. As described above, the support structure 4 may be integrally formed with the fuselage 11, i. e. it may be implemented by the fuselage 11. However, the support structure 4 may also be a separate component having the fixed hook 4a, which is merely rigidly attached to the fuselage 11.

### Reference List

1 actuating system
1a pivotable mechanical transmission element
1b coupling link
1c latching shaft
1d locking shaft
1f coupling link connecting element
1g unlatching rotation direction
1h latching rotation direction
2 actuatable door
2a door frame
2b door closing swivel direction
2c door opening swivel direction
2d open position
2e closed position
2f door outer skin
3 latching device
3a latching bracket
3b latching bracket pivot bearing
3c latching bracket connecting element
3d unlatching swivel direction
3e latching swivel direction
3f outer bracket cover
3g spool support shaft
3h spool
3i bracket unlatching swivel direction
3j spool opening rolling direction
3k, 3l latching bracket arms
3m, 3n securing means
3o spool motion path for door opening movement in latched condition
3p spool motion path for latching in door closed condition
4 support structure
4a fixed hook
4b hinge structure
4c spool interface area
4d form fit margin
4e hook-sided contour
5 locking device
5a locking cam
5b unlocking swivel direction
5c locking swivel direction
6 door stopper
7 seal
10 aircraft
11 fuselage
12 floor
13, 14 cargo compartments
13a, 14a cargo
22 actuatable door
22b door closing swivel direction
22c door opening swivel direction
22d open position
22e closed position
23 latching device
24a fixed hook
24b hinge structure
61 excenter pin
62 excenter bushing
63a, 63b support sleeves
71a, 71b, 71c door opening movement directions
81 mean pressure plane
82 inner pressure
83 interface loads
84 fuselage loads

## Claims

1. An actuatable door (2) for an aircraft (10) that is pivotally mounted to a support structure (4) and pivotable in a door opening swivel direction (2c) from a closed position (2e) in the support structure (4) toward an open position (2d), comprising an actuating system (1) with at least one latching device (3) that comprises a latching bracket (3a) adapted for blocking the actuatable door (2) in the closed position (2e), the latching bracket (3a) being pivotally mounted to a pivot bearing (3b) and connected to a pivotable mechanical transmission element (1a) via a coupling link (1b), the coupling link (1b) being pivotally mounted to the latching bracket (3a) and to the pivotable mechanical transmission element (1a), the pivotable mechanical transmission element (1a) being coupled to a rotatable latching shaft (1c), wherein rotation of the rotatable latching shaft (1c) in an unlatching rotation direction (1g) results in pivoting of the pivotable mechanical transmission element (1a) in the unlatching rotation direction (1g) and pivoting of the latching bracket (3a) in a bracket unlatching swivel direction (3i), and wherein the bracket unlatching swivel direction (3i) and the door opening swivel direction (2c) are identical.

2. The actuatable door (2) of claim 1,
wherein, in the closed position (2e) of the actuatable door (2), the latching bracket (3a) is blockable in a blocked position on a fixed hook (4a) that is rigidly attached to the support structure (4).

3. The actuatable door (2) of claim 1 or 2,
wherein the pivot bearing (3b) is mounted to a door frame (2a) for pivotally connecting the latching bracket (3a) to the door frame (2a).

4. The actuatable door (2) of claims 2 and 3,
wherein, in the blocked position of the latching bracket (3a), the latching bracket (3a) blocks the door frame (2a) on the fixed hook (4a).

5. The actuatable door (2) of claim 3 or 4,
wherein, in the closed position (2e) of the actuatable door (2), the door frame (2a) forms a form fit with the fixed hook (4a).

6. The actuatable door (2) of any one of claims 3 to 5,
wherein a door stopper (6) is provided on the fixed hook (4a) for limiting a closing movement of the door frame (2a) on the fixed hook (4a).

7. The actuatable door (2) of any one of claims 2 to 6,
wherein at least one locking device (5) with a locking cam (5a) is provided for locking the latching bracket (3a) in the blocked position in a locked state.

8. The actuatable door (2) of any one of claims 2 to 7,
wherein a seal (7) is provided for sealing the door frame (2a) against the support structure (4) in the closed position (2e) of the actuatable door (2).

9. The actuatable door (2) of any one of claims 2 to 8,
wherein the latching bracket (3a) comprises a spool (3h) provided for rolling on the fixed hook (4a).

10. The actuatable door (2) of any one of claims 3 to 6,
wherein the door frame (2a) is pivotally connected via the pivot bearing (3b) to latching bracket arms (3k, 3l).

11. The actuatable door (2) of claim 10,
wherein the latching bracket arms (3k, 3l) are rigidly attached to a plate-shaped bracket cover (3f).

12. The actuatable door (2) of claim 10,
wherein the latching bracket arms (3k, 3l) are integrally formed with a plate-shaped bracket cover (3f).

13. The actuatable door (2) of claims 9 and 12,
wherein the latching bracket arms (3k, 3l) are connected to a spool support shaft (3g) on which the spool (3h) is rotatably arranged.

14. The actuatable door (2) of claim 13,
wherein the spool support shaft (3g) is secured to the latching bracket arms (3k, 3l) by means of associated securing means (3m, 3n).

15. An aircraft (10) with a fuselage (11) and an actuatable door (2) that is pivotally mounted to the fuselage (11) and pivotable in a door opening swivel direction (2c) from a closed position (2e) in the fuselage (11) toward an open position (2d), comprising an actuating system (1) with at least one latching device (3) that comprises a latching bracket (3a) adapted for blocking the actuatable door (2) in the closed position (2e), the latching bracket (3a) being pivotally mounted to a pivot bearing (3b) and connected to a pivotable mechanical transmission element (1a) via a coupling link (1b), the coupling link (1b) being pivotally mounted to the latching bracket (3a) and to the pivotable mechanical transmission element (1a), the pivotable mechanical transmission element (1a) being coupled to a rotatable latching shaft (1c), wherein rotation of the rotatable latching shaft (1c) in an unlatching rotation direction (1g) results in pivoting of the pivotable mechanical transmission element (1a) in the unlatching rotation direction (1g) and pivoting of the latching bracket (3a) in a bracket unlatching swivel direction (3i), and wherein the bracket unlatching swivel direction (3i) and the door opening swivel direction (2c) are identical.
